# EUROPEAN PATENT APPLICATION

(11) **EP 4 489 097 A2**
(43) Date of publication of application: **08.01.2025**
(21) Application number: 24178397.6
(22) Date of filing: 28.05.2024
(51) Int. Cl.: H01M 4/13, H01M 10/0525

(54) **AN ELECTRODE SHEET FOR LITHIUM ION BATTERY**

(30) Priority: 01.06.2023 CN 202310645162
(71) Applicant: Techtronic Cordless GP, Anderson, SC 29621 (US)
(72) Inventor: LU, Ke, Dongguan City (CN); GENG, Dan, Dongguan City (CN); LI, Jin Wei, Dongguan City (CN)
(74) Representative: Novagraaf Group

(57) **Abstract**

The present invention provides an electrode sheet for a lithium ion battery, comprising a coated part coated with an electrode material along a length direction of the sheet and an uncoated part uncoated with the electrode material, wherein the sheet comprises a sheet head and a sheet tail; the uncoated part of the sheet head is provided with a head notch; and the uncoated part of the sheet tail is provided with a tail notch. In the present invention, notches of specific shapes and sizes are provided in the uncoated parts of the head and tail ends of the electrode sheet, respectively, which can diminish the problem of a tab end face becoming larger in diameter, protruded outward or folded when flattened, and diminish the problem of a center hole being blocked.

## Description

### Technical Field

The present invention relates to the field of battery production, and in particular to an electrode sheet for a lithium ion battery.

### Background Art

At present, full-tab positive and negative electrodes have generally started to be used for batteries. That is, when a positive electrode slurry is coated on a positive electrode current collector, a part of an area uncoated with the slurry (a positive electrode empty foil area) is reserved at an end edge of the positive electrode current collector, and when a negative electrode slurry is coated on a negative electrode current collector, a part of an area uncoated with the slurry (a negative electrode empty foil area) is reserved at an end edge of the negative electrode current collector. After a positive electrode sheet, a negative electrode sheet and a separator are rolled to form a core rolling body, a foil-shaped body in the positive electrode empty foil area forms a tab end face of the positive electrode, and a foil-shaped body in the negative electrode empty foil area forms a tab end face of the negative electrode. The tab end faces are further welded together with a current collecting plate to output a battery current from the current collecting plate.

Since the foil-shaped body on the tab end face is relatively thin, it is soft and easy to deform. When the tab end face is flattened, applying pressure will cause the entire foil-shaped body to bend and deform. In one aspect, this will cause the tab end face of the core rolling body to become larger in diameter, protruded outward or folded, so that the core rolling body cannot be installed in a battery case or is connected with the battery case and short-circuited. In another aspect, it will cause a center hole of the core rolling body to be blocked, affecting subsequent bottom welding, liquid injection and other operations.

Therefore, there is a need to provide an electrode sheet for a lithium ion battery so as to at least partially solve at least one of the above problems.

### Summary of the Invention

An obj ective of the present invention is to provide an electrode sheet for a lithium ion battery. In the present invention, notches of specific shapes and sizes are provided in uncoated parts of head and tail ends of the electrode sheet, respectively, which can diminish the problem of the tab end face becoming larger in diameter, protruded outward or folded when flattened, and diminish the problem of the center hole being blocked.

According to an aspect of the present invention, an electrode sheet for a lithium ion battery is provided. The electrode sheet comprises a coated part coated with an electrode material along a length direction of the sheet and an uncoated part uncoated with the electrode material; the sheet comprises a sheet head and a sheet tail; the uncoated part of the sheet head is provided with a head notch; and the uncoated part of the sheet tail is provided with a tail notch.

In an embodiment, the head notch and the tail notch each independently comprise an obtuse angle structure or a circular arc structure.

In an embodiment, the head notch comprises a first head edge and a second head edge; and the first head edge extends along the length direction of the sheet, and the second head edge separately intersects with the first head edge and an upper edge of the uncoated part.

In an embodiment, the tail notch comprises a first tail edge and a second tail edge; and the first tail edge extends along the length direction of the sheet, and the second tail edge separately intersects with the first tail edge and the upper edge of the uncoated part.

In an embodiment, the second head edge has an inclination angle greater than that of the second tail edge.

In an embodiment, the second head edge and the second tail edge are each independently a straight line or a curve.

In an embodiment, an included angle between the straight line and the upper edge of the uncoated part is an obtuse angle, which is 100 degrees to 175 degrees, preferably, 120 degrees to 175 degrees, and more preferably, 160 degrees to 175 degrees.

In an embodiment, the curve is a circular arc, and a central angle corresponding to the circular arc is 10 degrees to 90 degrees, preferably 30 degrees to 90 degrees, and more preferably, 60 degrees to 90 degrees.

In an embodiment, the second head edge is separately smoothly connected with the first head edge and the upper edge of the uncoated part; and/or
the second tail edge is separately smoothly connected with the first tail edge and the upper edge of the uncoated part.

In an embodiment, a ratio of a length of the sheet to a maximum width is 15:1 to 30:1, preferably 20:1 to 25:1, and further preferably, 22:1 to 23:1.

In an embodiment, a ratio of a width of the coated part to a maximum width of the uncoated part is 9:1 to 11:1, preferably 9:1 to 10:1.

In an embodiment, a ratio of a width of a left edge of the uncoated part to a maximum width of the uncoated part is 0 to 0.7, preferably 0.2 to 0.6, and more preferably 0.3 to 0.5.

In an embodiment, a ratio of a width of a right edge of the uncoated part to a maximum width of the uncoated part is 0 to 0.7, preferably 0.2 to 0.6, and more preferably 0.3 to 0.5.

In an embodiment, a ratio of a length of the sheet to a length of a first head edge is 20:1 to 30:1, preferably 25:1 to 28:1, and further preferably 26:1 to 27:1.

In an embodiment, a ratio of a length of the sheet to a length of a first tail edge is 15:1 to 30:1, preferably 20:1 to 25:1, and further preferably 22:1 to 23:1.

In an embodiment, the electrode sheet is a positive electrode sheet, and the electrode material is a positive electrode material.

In an embodiment, the electrode sheet is a negative electrode sheet, and the electrode material is a negative electrode material.

According to another aspect of the present invention, a lithium ion battery is provided. The lithium ion battery comprises the electrode sheet for a lithium ion battery as described above.

### Brief Description of the Drawings

To better understand the above and other objectives, features, advantages and functions of the present invention, reference may be made to the preferred embodiments shown in the drawings. In the drawings, identical reference signs denote identical components. It should be understood by a person skilled in the art that the drawings are intended to schematically illustrate preferred embodiments of the present invention, without imposing any limitations on the scope of the present invention, and that the various components in the drawings are not drawn to scale.
FIG. 1 is a schematic diagram of an electrode sheet for a lithium ion battery according to a preferred embodiment of the present invention, in which a coated part, an uncoated part, a sheet head and a sheet tail are shown;
FIG. 2 is a partially enlarged schematic diagram of the sheet head (A); and
FIG. 3 is a partial enlarged schematic diagram of the sheet tail (B).

### Reference symbols:

1 coated part
11 left edge of coated part
12 right edge of coated part
2 uncoated part
21 upper edge of uncoated part
22 left edge of uncoated part
23 right edge of uncoated part
3 sheet head
31 head notch
311 first head edge
312 second head edge
4 sheet tail
41 tail notch
411 first tail edge
412 second tail edge

### Detailed Description of Embodiments

Specific embodiments of the present invention are now described in detail with reference to the drawings. The embodiments described here are merely preferred embodiments according to the present invention. A person skilled in the art could conceive of other ways of implementing the present invention on the basis of the preferred embodiments, and such other ways shall likewise fall within the scope of the present invention. In some embodiments, in order to avoid confusion with the present invention, some technical features that are well known in the art are not described.

### Definitions

Unless otherwise defined, all technical and scientific terms used herein have the same meanings as commonly understood by a person of ordinary skill in the art. In case of conflict, the present invention (including definitions) shall prevail. Only exemplary methods and materials will be described below. Structures, methods and materials similar or equivalent to those described in the present invention can all be used in the experiments or tests of the present invention. The structures, materials, methods, and examples disclosed in the present invention are illustrative only and not intended to be limiting.

For the description of numerical ranges in the present invention, every intermediate number within the numerical ranges is expressly intended to have the same degree of accuracy. For example, for the range of 6 to 9, the numbers of 7 and 8 are considered in addition to 6 and 9, and for the range of 6.0 to 7.0, the numbers 6.0, 6.1, 6.2, 6.3, 6.4, 6.5, 6.6, 6.7, 6.8, 6.9 and 7.0 are expressly expected.

### Electrode Sheet

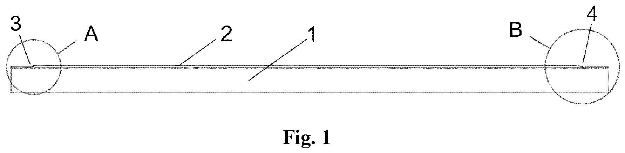

FIGS. 1-3 show an electrode sheet for a lithium ion battery according to the present invention. First of all, it should be noted that directional and positional terms in the present invention should be understood to mean relative directions and positions, not absolute directions and positions. The directional terms and positional terms used in the present invention can be explained with reference to exemplary structures shown in FIGS. 1-3.

In an existing electrode sheet for a lithium ion battery, when a tab end face is flattened, applying pressure will cause the entire foil-shaped body to bend and deform. In one aspect, this will cause the tab end face of the core rolling body to become larger in diameter, protruded outward or folded, so that the core rolling body cannot be installed in a battery case or is connected with the battery case and short-circuited. In another aspect, it will cause a center hole of the core rolling body to be blocked, affecting subsequent bottom welding, liquid injection and other operations.

In view of the above technical problems, the present invention provides an electrode sheet for a lithium ion battery. Referring to FIGS. 1-3, an electrode sheet for a lithium ion battery according to a preferred embodiment of the present invention includes a coated part 1 coated with an electrode material along a length direction of the sheet and an uncoated part 2 uncoated with the electrode material. The sheet includes a sheet head 3 and a sheet tail 4. The uncoated part 2 of the sheet head 3 is provided with a head notch 31. The uncoated part 2 of the sheet tail 4 is provided with a tail notch 41.

As a further preferred embodiment, the electrode sheet has a rectangular structure as a whole, and the ratio of its length to the maximum width (the width of a part without notches) is 15:1 to 30:1, preferably 20:1 to 25:1, and more preferably 22:1 to 23:1. As a preferred embodiment, the ratio of the width of the coated part 1 to the maximum width of the uncoated part 2 is 9:1 to 11:1, preferably 9:1 to 10:1.

In a process of rolling a core, the sheet head 3 is located in an inner ring of the core. A head notch 31 is provided in the uncoated part 2 of the sheet head 3 to diminish the problem of a center hole being blocked when the tab end surface is flattened. The sheet tail 4 is located in an outer ring of the core. A tail notch 41 is provided in the uncoated part 2 of the sheet tail 4 to diminish the problem of the tab end surface becoming larger in diameter, protruded outward or folded when the tab end surface is flattened. In the present invention, excellent technical effects are obtained by specially designing the structures of the head notch 31 and the tail notch 41 separately, which will be specifically described below.

It should be noted that there are no specific limitations on the structures and sizes of the head notch 31 and the tail notch 41 as long as the above technical problems can be solved. As a preferred embodiment, the head notch 31 and the tail notch 41 may each independently include an obtuse angle structure or a circular arc structure. Specifically, both the head notch 31 and the tail notch 41 may include obtuse angle structures or circular arc structures, or one of them may include an obtuse angle structure and the other may include a circular arc structure.

Generally, a right angle is a reference base for cutting off the sheet, but it is found in the present invention that the right angle structure is easily broken during the rolling process of the sheet, and is easily folded again. Therefore, in the present invention, the head notch 31 and the tail notch to 41 are designed to include an obtuse angle structure or a circular arc structure to solve the above problem.

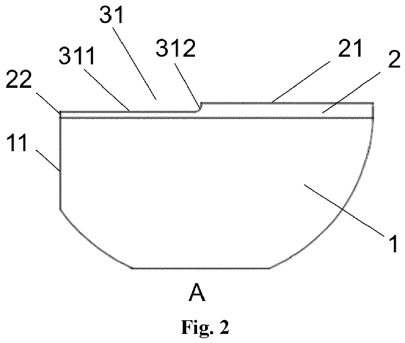

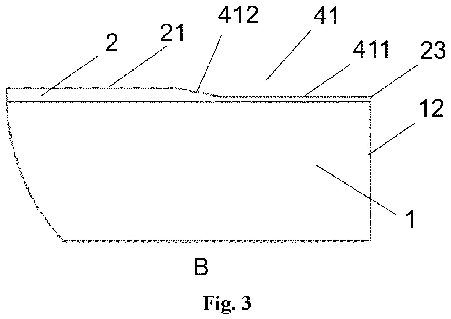

Regarding the obtuse angle structure and the circular arc structure, referring to FIGS. 2 and 3, as an embodiment, the head notch 31 includes a first head edge 311 and a second head edge 312. The first head edge 311 extends along the length direction of the sheet, and the second head edge 312 separately intersects with the first head edge 311 and the upper edge 21 of the uncoated part. The tail notch 41 includes a first tail edge 411 and a second tail edge 412. The first tail edge 411 extends along the length direction of the sheet, and the second tail edge 412 separately intersects with the first tail edge 411 and the upper edge 21 of the uncoated part. The second head edge 312 and the second tail edge 412 are each independently a straight line (corresponding to the obtuse angle structure) or a curve (corresponding to the circular arc structure). Specifically, the second head edge 312 and the second tail edge 412 may both be straight lines or may both be curves, or one of them may be a straight line and the other may be a curve.

In order to better achieve the technical effects of the present invention, as a preferred embodiment, the second head edge 312 has an inclination angle greater than that of the second tail edge 412. The inclination angle described in the present invention is, for the second head edge 312, an included angle between a connection line of intersections where the second head edge 312 separately intersects with the first head edge 311 and the upper edge 21 of the uncoated part, and the first head edge 311, and for the second tail edge 412, an included angle between a connection line of intersections where the second tail edge 412 separately intersects with the first tail edge 411 and the upper edge 21 of the uncoated part, and the first tail edge 411.

As a preferred embodiment, referring to FIG. 3, when the second head edge 312 or the second tail edge 412 is a straight line, an included angle between the straight line and the upper edge 21 of the uncoated part is an obtuse angle. There is no special restriction on the angle of the obtuse angle, as long as the technical effects of the present invention can be achieved. As a preferred embodiment, the angle of the obtuse angle is 100 degrees to 175 degrees, preferably 120 degrees to 175 degrees, and more preferably, 160 degrees to 175 degrees.

As a preferred embodiment, referring to FIG. 2, when the second head edge 312 or the second tail edge 412 is a curve, the curve is preferably a circular arc.

Regarding the length and inclination angle of the circular arc, when the width of the left edge 22 of the uncoated part or the right edge 23 of the uncoated part is determined, it mainly depends on the size of the central angle corresponding to the circular arc. There is no special restriction on the angle of the central angle as long as the technical effects of the present invention can be achieved. As a preferred embodiment, the central angle corresponding to the circular arc is 10 degrees to 90 degrees, preferably 30 degrees to 90 degrees, and more preferably 60 degrees to 90 degrees.

In order to better avoid the breakage of the sheet during the rolling process, as a preferred embodiment, the second head edge 312 is separately smoothly connected with the first head edge 311 and the upper edge 21 of the uncoated part, and the second tail edge 412 is separately smoothly connected with the first tail edge 411 and the upper edge 21 of the uncoated part.

As a further preferred embodiment, the ratio of the length of the sheet to the length of the first head edge 311 is 20:1 to 30:1, preferably 25:1 to 28:1, and further preferably 26:1 to 27:1. The above length ratio is such that after the sheet is rolled into a jelly roll, the sheet head 3 is roughly cut off by 5-6 turns to form the head notch 31.

Continuing to refer to FIG. 2, as a preferred embodiment, the ratio of the width of the left edge 22 of the uncoated part to the maximum width of the uncoated part 2 is 0 (the uncoated part is completely cut off) to 0.7, preferably 0.2 to 0.6, and more preferably 0.3 to 0.5. The above width ratio is such that after the sheet is rolled into a jelly roll, the head notch 31 has a suitable depth.

It is verified in the present invention that the above special design of the head notch 31 effectively diminishes the problem of the central hole being blocked, and has the technical effects of facilitating the penetration of an electrolyte, making the sheet less likely to break during the rolling process, and increasing the internal resistance of the sheet less (cutting off too much may easily cause excessive internal resistance).

Referring to FIG. 3, as a further preferred embodiment, the ratio of the length of the sheet to the length of the first tail edge 411 is 15:1 to 30:1, preferably 20:1 to 25:1, and further preferably 22:1 to 23:1. The above length ratio is such that after the sheet is rolled into a jelly roll, the sheet tail 4 is roughly cut off by 2 turns to form a tail notch 41.

Continuing to refer to FIG. 3, as a preferred embodiment, the ratio of the width of the right edge 23 of the uncoated part to the maximum width of the uncoated part 2 is 0 (the uncoated part is completely cut off) to 0.7, preferably 0.2 to 0.6, and more preferably 0.3 to 0.5. The above width ratio is such that after the sheet is rolled into a jelly roll, the tail notch 41 has a suitable depth.

It is verified in the present invention that the above special design of the tail notch 41 effectively diminishes the problem that the tab end surface becomes larger in diameter, protruded outward or folded when flattened, so that the rolling core cannot be installed in a case or to be connected with the case and short-circuited; and at the same time, it has the technical effects of facilitating the assembly of a rubber ring to the core, making the sheet less likely to break during the rolling process, and increasing the internal resistance of the sheet less (cutting off too much may easily cause excessive internal resistance).

It should be noted that the electrode sheet for the lithium ion battery according to the present invention may be a positive electrode sheet or a negative electrode sheet, and the electrode material corresponds to a positive electrode material and a negative electrode material separately. Regarding the preparation of an electrode sheet coating, conventional preparation methods in the art can be used, and will not be described again in the present invention.

In addition, the present invention further provides a lithium ion battery, including the electrode sheet for a lithium ion battery as described above. A positive electrode of the lithium ion battery is the electrode sheet according to the present invention, or a negative electrode of the lithium ion battery is the electrode sheet according to the present invention, or each of the two is the electrode sheet according to the present invention. Regarding the preparation of the lithium ion battery, conventional preparation methods in the art can be used, and will not be described again in the present invention.

The above description of various embodiments of the present invention is provided to a person of ordinary skill in the relevant art for descriptive purposes. The present invention is not intended to be exclusive or limited to a single disclosed embodiment. Based on the above, a person of ordinary skill in the art as taught above will understand various substitutes for and variants of the present invention. Therefore, although some alternative embodiments have been specifically described, a person of ordinary skill in the art will understand, or develop with relative ease, other embodiments. The present invention is intended to include all substitutes for, alterations to, and variants of the present invention described herein, as well as other embodiments falling within the spirit and scope of the present invention described above.

## Claims

1. An electrode sheet for a lithium ion battery, wherein the electrode sheet comprises a coated part (1) coated with an electrode material along a length direction of the sheet and an uncoated part (2) uncoated with the electrode material; the sheet comprises a sheet head (3) and a sheet tail (4); the uncoated part (2) of the sheet head (3) is provided with a head notch (31); and the uncoated part (2) of the sheet tail (4) is provided with a tail notch (41).

2. The electrode sheet for a lithium ion battery as claimed in claim 1, wherein: the head notch (31) and the tail notch (41) each independently comprise an obtuse angle structure or a circular arc structure.

3. The electrode sheet for a lithium ion battery as claimed in claim 1, wherein: the head notch (31) comprises a first head edge (311) and a second head edge (312); and the first head edge (311) extends along the length direction of the sheet, and the second head edge (312) separately intersects with the first head edge (311) and an upper edge (21) of the uncoated part.

4. The electrode sheet for a lithium ion battery as claimed in claim 3, wherein: the tail notch (41) comprises a first tail edge (411) and a second tail edge (412); and the first tail edge (411) extends along the length direction of the sheet, and the second tail edge (412) separately intersects with the first tail edge (411) and the upper edge (21) of the uncoated part.

5. The electrode sheet for a lithium ion battery as claimed in claim 4, wherein: the second head edge (312) has an inclination angle greater than that of the second tail edge (412); and preferably, the second head edge (312) and the second tail edge (412) are each independently a straight line or a curve.

6. The electrode sheet for a lithium ion battery as claimed in claim 5, wherein: an included angle between the straight line and the upper edge (21) of the uncoated part is an obtuse angle, which is 100 degrees to 175 degrees, preferably, 120 degrees to 175 degrees, and more preferably, 160 degrees to 175 degrees.

7. The electrode sheet for a lithium ion battery as claimed in claim 5, wherein: the curve is a circular arc, and a central angle corresponding to the circular arc is 10 degrees to 90 degrees, preferably 30 degrees to 90 degrees, and more preferably, 60 degrees to 90 degrees.

8. The electrode sheet for a lithium ion battery as claimed in claim 4, wherein: the second head edge (312) is separately smoothly connected with the first head edge (311) and the upper edge (21) of the uncoated part; and/or
the second tail edge (412) is separately smoothly connected with the first tail edge (411) and the upper edge (21) of the uncoated part.

9. The electrode sheet for a lithium ion battery as claimed in claim 1, wherein: a ratio of a length of the sheet to a maximum width is 15:1 to 30:1, preferably 20:1 to 25: 1, and further preferably, 22:1 to 23:1; and preferably, a ratio of a width of the coated part (1) to a maximum width of the uncoated part (2) is 9:1 to 11:1, preferably 9:1 to 10:1.

10. The electrode sheet for a lithium ion battery as claimed in claim 1, wherein: a ratio of a width of a left edge (22) of the uncoated part to a maximum width of the uncoated part (2) is 0 to 0.7, preferably 0.2 to 0.6, and more preferably 0.3 to 0.5.

11. The electrode sheet for a lithium ion battery as claimed in claim 1, wherein: a ratio of a width of a right edge (23) of the uncoated part to a maximum width of the uncoated part (2) is 0 to 0.7, preferably 0.2 to 0.6, and more preferably 0.3 to 0.5.

12. The electrode sheet for a lithium ion battery as claimed in claim 1, wherein: a ratio of a length of the sheet to a length of a first head edge (311) is 20:1 to 30:1, preferably 25:1 to 28:1, and further preferably 26:1 to 27:1.

13. The electrode sheet for a lithium ion battery as claimed in claim 1, wherein: a ratio of a length of the sheet to a length of a first tail edge (411) is 15:1 to 30:1, preferably 20:1 to 25:1, and further preferably 22:1 to 23:1.

14. The electrode sheet for a lithium ion battery as claimed in any one of claims 1-13, wherein: the electrode sheet is a positive electrode sheet, and the electrode material is a positive electrode material; or the electrode sheet is a negative electrode sheet, and the electrode material is a negative electrode material.

15. A lithium ion battery, wherein the lithium ion battery comprises the electrode sheet for a lithium ion battery as claimed in any one of claims 1-13.
